## Europäisches Patentamt

## European Patent Office

## Office européen des brevets

(19)

(11) Publication number: **0 117 936**
**B1**

(12) **EUROPEAN PATENT SPECIFICATION**

(45) Date of publication of patent specification: **19.02.86**

(51) Int. Cl.⁴: **C 04 B 35/58**

(21) Application number: **83303458.0**

(22) Date of filing: **15.06.83**

(54) Silicon nitride sintered bodies and a method for producing the same.

(30) Priority: **09.02.83 JP 18963/83**

(43) Date of publication of application:
**12.09.84 Bulletin 84/37**

(45) Publication of the grant of the patent:
**19.02.86 Bulletin 86/08**

(84) Designated Contracting States:
**DE FR GB IT SE**

(56) References cited:
**GB-A-2 062 688**
**US-A-4 218 257**
**US-A-4 356 136**

(73) Proprietor: **NGK INSULATORS, LTD.**
**2-56, Suda-cho, Mizuho-ku**
**Nagoya-shi, Aichi 467 (JP)**

(72) Inventor: **Matsuhiro, Keiji**
**303 Takemi Mansion 37-1 Takemi-Cho, 4-Chome**
**Mizuho-ku Nagoya City (JP)**
Inventor: **Matsui, Minoru**
**193 Aza-Imonoshihora Ohaza-Kamiyashiro**
**Idaka-cho**
**Meito-Ku Nagoya City (JP)**

(74) Representative: **Paget, Hugh Charles Edward**
**et al**
**MEWBURN ELLIS & CO. 2/3 Cursitor Street**
**London EC4A 1BQ (GB)**

EP 0 117 936 B1

Courier Press, Leamington Spa, England.

# 0 117 936

**Description**

The present invention relates to silicon nitride sintered bodies and a method for producing the same.

Silicon nitride sintered bodies have excellent mechanical strength, fracture toughness, heat resistance, thermal shock resistance and corrosion resistance. Their field of use as heat resistant high strength materials has therefore been extensively developed.

Silicon nitride is a substance having high covalency and itself has very poor sinterability, so that in order to obtain sintered bodies having high density, it is known that a sintering aid, such as $MgO$, $Al_2O_3$, $Y_2O_3$, $ZrO_2$ and the like is generally added. That is to say, there are already known silicon nitride sintered bodies containing as sintering aids (a) $MgO$, (b) $MgO$ and $ZrO_2$, and (c) $Y_2O_3$, $Al_2O_3$ and $MgO$.

However, the prior art silicon nitride sintered bodies have not always been satisfactory in mechanical strength, fracture toughness and the like. Thus, prior art sintered bodies produced by the pressureless sintering process have a four point flexural strength at room temperature of lower than 70 kg/mm$^2$ and a fracture toughness lower than 6 MN/m$^{3/2}$. Sintered bodies having better properties are sought as the high strength materials.

To obtain silicon nitride sintered bodies having high density, a pressureless sintering process and a sintering process under high pressure are known.

In the sintering process under high pressure, mechanical pressure is positively applied to densify the sintered body, and this can provide articles having high density, but it is difficult to produce articles having complicated shapes and furthermore, productivity is poor and the firing installation is complicated, and therefore the production cost is high.

On the other hand, the pressureless sintering process can produce articles having complicated shapes more easily and cheaply than the sintering process under high pressure and therefore has a high commercial value, but to achieve densification, it is necessary to make the grain size of the raw material powder finer, to increase the amount of the sintering aid and to raise the firing temperature but it is impossible to obtain articles having such high density and strength as in the sintered bodies obtained in the high pressure process.

The present invention aims to obviate these defects of the prior art and to make it possible to obtain silicon nitride sintered bodies having high density, high strength and high fracture toughness, by a method which is relatively easy and cheap using the pressureless sintering process.

The present invention provides a silicon nitride sintered body containing oxides or oxynitrides of Sr, Mg, a rare earth element and Zr in an amount of 0.1—15% by weight of each of Sr, Mg and a rare earth element (calculated as weight of element), 0.1—11% by weight of zirconium element and the remainder being $Si_3N_4$ of not less than 70% by weight. The invention furthermore provides a method for producing a silicon nitride sintered body by shaping a starting material containing compounds of each element of Sr, Mg, a rare earth element and Zr as sintering aids in an amount of 0.1—18% by weight calculated as SrO, an amount of 0.2—25% by weight calculated as MgO, an amount of 0.1—19% by weight calculated as an oxide of trivalent rare earth element, an amount of 0.1—15% by weight calculated as $ZrO_2$ and the remainder being not less than 70% by weight of silicon nitride powder and firing the shaped body in nitrogen or an inert gas atmosphere.

The present inventors have found that when a second phase consisting of the above-recited amounts of oxides or oxynitrides of Sr, Mg, a rare earth element and Zr is formed at the grain boundary of the $Si_3N_4$ crystals in the course of firing, the compounds of Sr, Mg, the rare earth element and Zr and $Si_3N_4$ synergistically develop an activity for promoting the densification and the effect for controlling the microstructure, whereby silicon nitride sintered bodies having particularly excellent mechanical strength and fracture toughness can be obtained. Furthermore, it has been found that the method for producing such sintered bodies can be firstly attained by firing a raw batch material containing the given amounts of the specifically defined sintering aid in silicon nitride raw material powder in nitrogen or an inert gas. The term "oxynitrides" used in the present invention means crystalline or amorphous compounds in which a cation is a metal element and an anion is oxygen and nitrogen, which are produced by reacting a single or plurality of metal oxides with $Si_3N_4$ or nitrogen gas.

The term "zirconia ceramics" used in the present invention means a sintered body consisting of $ZrO_2$, a zirconia sintered body containing CaO, MgO, $Y_2O_3$, $CeO_2$, etc. as a stabilizer or a zirconia sintered body additionally containing $SiO_2$, $Al_2O_3$, etc. as a sintering aid together with such a stabilizer.

More detailed explanation will be given below of the silicon nitride sintered bodies of the present invention. The sintered bodies contain oxides or oxynitrides of each element of Sr, Mg, a rare earth element, preferably Ce or Y in an amount of 0.1—15% by weight, preferably 0.3—10% by weight as each metal element respectively, zirconium oxide or oxynitride preferably having a crystal grain size of less than 5 μm, more preferably less than 1 μm, in an amount of 0.1—11% by weight as zirconium element and the remainder being not less than 70% by weight, preferably not less than 80% by weight of $Si_3N_4$.

It is considered that the reason why silicon nitride sintered bodies of the present invention have high strength and toughness, is based on the following facts.

Compounds of Sr, Mg, a rare earth element or Zr, even alone, react with $Si_3N_4$ and $SiO_2$ in the raw material of silicon nitride during firing to form an amorphous substance, which promotes the densification of $Si_3N_4$ which is a substance having poor sinterability. But, the amorphous substances of oxides or

2

oxynitrides concurrently containing Sr, Mg, a rare earth element and Zr have far higher activity for promoting densification than the activity attained by the single compound and the strength is far higher than that of an amorphous substance of the oxide or oxynitride containing the single compound and it is assumed that the oxide or oxynitride of these elements improves the strength of silicon nitride sintered body as a binder of the grain boundary of $Si_3N_4$.

It is assumed that the zirconium compound reacts with the strontium compound, magnesium compound, a compound of rare earth element, $Si_3N_4$ and $SiO_2$ during sintering to promote the densification of $Si_3N_4$ and also a part of the zirconium compound is formed as crystalline zirconia in the grain boundary to increase the fracture toughness of silicon nitride sintered body.

The silicon nitride sintered bodies of the present invention can be produced by the following method.

A raw batch material which contains, as the sintering aid, strontium compound in an amount of 0.1—18% by weight, preferably 0.4—12% by weight calculated as SrO, magnesium compound in an amount of 0.2—25% by weight, preferably 0.5—17% by weight calculated as MgO, a compound of a rare earth element, preferably Ce or Y in an amount of 0.1—19% by weight, preferably 0.4—13% by weight calculated as an oxide of trivalent rare earth element and zirconium compound in an amount of 0.1—15% by weight calculated as $ZrO_2$ and the remainder being a raw material powder of silicon nitride of not less than 70% by weight, is prepared. In this case, as the pulverizing machine, use may be made of a rotary mill, a vibratory mill, an attrition mill or the like. Either wet pulverizing or dry pulverizing may be used but an amount of mixed powder, an amount of grinding balls, a liquid medium, a slurry viscosity and the like are properly selected depending upon the pulverizing system. As the liquid medium, use may be made of acetone, alcohol, water or the like. The pulverizing time varies depending upon the pulverizing process and the amount to be pulverized but is defined to be an enough time in which the material to be pulverized is finely divided and the average grain size and BET specific surface area are saturated into a given limit value.

When the raw batch material is prepared, the compounds of Sr, Mg and a rare earth element may be mixed in a powder form or a solution form upon pulverizing but zirconium compound is more preferably added to the raw batch material through abrasion of the grinding balls made of zirconia ceramics during the pulverizing step using said grinding balls, than mixing in the powder form or the solution form upon pulverizing.

When $ZrO_2$ is added through abrasion of the grinding balls made of zirconia ceramics, the pulverizing time is controlled so as not to exceed 15% by weight by chemically analyzing an amount of $ZrO_2$ mixed, in addition to measurement of the average grain size and BET specific surface area.

In order to obtain a high pulverizing effect, the grinding balls made of zirconia ceramics must have a specific gravity of more than 5 and Mohs hardness of more than 6 and therefore, the grinding balls having a content of more than 70% by weight of $ZrO_2$ are preferable. The shape may be spheric, cylindrical or other and when the outer diameter is too small, coarse particles in the raw batch material powder are not pulverized and the strength of the sintered body is not improved, so that the outer diameter is preferred to be 3—10 mm, preferably 4—8 mm.

To the raw batch material pulverized into the given grain size is added a shaping aid, such as polyvinyl alcohol, if necessary and after the resulting mixture is stirred, the powder or slurry is dried to obtain the shaping powder. Said powder is shaped by means of a hydrostatic press or the like into a desired shape and fired at a temperature of 1,650—1,850°C, preferably 1,670—1,730°C for 0.2—5 hours, preferably 0.5—2 hours, under nitrogen or an inert gas atmosphere to obtain a silicon nitride sintered body.

The raw material powder of silicon nitride may contain α-phase or β-phase but a powder containing a larger amount of α-phase can provide sintered bodies having higher strength, so that the powder containing more than 50% by weight of α-phase is preferred, and it is preferable that the total content of Fe, Al, Ca, Na and K as the impurities is less than 3% by weight, preferably less than 1% by weight, the average grain size is less than 5 μm, preferably less than 1 μm, BET specific surface area is 1—50 $m^2$/g, preferably 5—30 $m^2$/g.

As the compounds of Sr, Mg, a rare earth element and Zr, use may be made of any which can form an oxide or oxynitride through firing, for example, SrO, $SrCO_3$, $Sr(NO_3)_2 \cdot 4H_2O$, MgO, $MgCO_3$, $Mg(OH)_2$, $Mg(NO_3)_2 \cdot 6H_2O$, $CeO_2$, $Ce(NO_3)_3 \cdot 6H_2O$, $Y_2O_3$, $Y(NO_3)_3$, $La_2O_3$, $Er_2O_3$, $ZrO_2$, $ZrO(OH)_2$, etc., which have purity of higher than 98% by weight. When adding in the powder form, it is preferable that the average grain size is less than 5 μm and BET specific surface area is 1—50 $m^2$/g. While, when these compounds are added as an aqueous solution of nitrate or an alkoxide solution, and then hydrolyzed, it is necessary to remove the components which are decomposed and evaporated by calcination.

Explanation will now be made with respect to the reason for limiting the components of the present invention.

The reason why the amounts of an oxide or oxynitride of Sr, Mg and a rare earth element are 0.1—15% by weight of each element as Sr, Mg or rare earth element, an amount of zirconium oxide or oxynitride is 0.1—11% by weight as zirconium element and the remainder is not less than 70% by weight of $Si_3N_4$, is as follows. When any one of Sr, Mg, and a rare earth element is present as less than 0.1% by weight, the effects for promoting the densification and controlling the microstructure which are developed by the synergistic activity of the above described four elements, are not satisfactorily obtained, whereby the high strength and the high fracture toughness are not attained and a large number of pores remain in the sintered body and the mechanical strength and the fracture toughness are reduced.

3

When any one of Sr, Mg and rare earth elements exceeds 15% by weight or Zr exceeds 11% by weight, the properties of the second phase consisting of an oxide or oxynitride of Sr, Mg, a rare earth element and Zr formed in the grain boundary of $Si_3N_4$ crystals become the same as for the case of the single element which is contained in the highest amount and the synergistic activity of the four elements cannot be developed. Particularly, zirconium oxide or oxynitride is about three times as high as $Si_3N_4$ in the thermal expansion coefficient, so that if such a substance is present in an unnecessarily large amount as the second phase of silicon nitride sintered body, the thermal expansion coefficient of the sintered body increases and the thermal shock resistance is deteriorated, so that it is preferable not to exceed 11% by weight.

The content of $Si_3N_4$ is defined to be not less than 70% by weight in order to prevent the deterioration of the very excellent mechanical property inherent in $Si_3N_4$ due to an unnecessary amount of the second phase formed at the grain boundary of $Si_3N_4$.

In the method for producing silicon nitride sintered bodies of the present invention, the amounts of the sintering aid of compounds of Sr, Mg, a rare earth element and Zr are defined to be respectively 0.1—18% by weight calculated as SrO, 0.2—25% by weight calculated as MgO and 0.1—19% by weight calculated as an oxide of a trivalent rare earth element and 0.1—15% by weight calculated as $ZrO_2$, in order to make the amounts of oxides or oxynitrides of Sr, Mg, a rare earth element and Zr in the sintered bodies to be 0.1—15% by weight as each of Sr, Mg and a rare earth element and 0.1—11% by weight as Zr.

The rare earth element is preferred to be Ce or Y, because the sintered bodies produced by particularly using Ce or Y among rare earth elements are high in strength and fracture toughness. The addition of zirconium compound is more preferably conducted by introducing the given amount into the raw batch material by abrasion of the grinding balls made of zirconia ceramics when pulverizing and mixing the raw material powder of silicon nitride and the compounds of Sr, Mg and a rare earth element, than by adding the zirconium compound through mixing in the form of powder or solution of said compound before or upon pulverizing, because $ZrO_2$ dispersed in the raw material due to the abrasion of the surface of the grinding balls in the pulverizing step using said grinding balls, is more easily and uniformly distributed in the raw material then zirconium compound added in the powder or solution form. Also the raw material powder is made fine more quickly and is uniformly mixed by the high pulverizing effect of the grinding balls made of zirconia ceramics. Thus a raw batch material having high sintering ability can be easily obtained in short time.

The following examples are given for the purpose of illustration of this invention and are not intended as limitations thereof.

Example 1

Raw material powder of silicon nitride having purity of 96% by weight, an average grain size of 0.7 µm, BET specific surface area of 8.5 $m^2/g$ was mixed with the sintering aids having purity of 98—99% by weight and an average grain size of 2—0.5 µm in the mixing ratio shown in Table 1. In order to prevent admixture of impurities, grinding balls of 7 mm diameter of which the iron surface is coated with nylon resin, were used. To 200 g of the raw material powder were added 500 ml of acetone and 500 g of the grinding balls in a vessel having an inner capacity of 1.2 l and made of nylon resin and the pulverizing was effected in a rotary mill at a rotation rate of 100 r.p.m. for 300 hours. After the resulting powder was dried and then shaped through hydrostatic press under pressure of 3 ton/$cm^2$ into 60×60×6 mm, the shaped body was pressureless sintered at 1,700°C for 1 hour in nitrogen gas to obtain silicon nitride sintered bodies (Samples No. 1—No. 14) of the present invention.

Furthermore, sintered bodies (Samples No. 15—No. 23) as comparative examples which are out of the limit range of the present invention, were prepared under the same conditions as above and the prior art samples (No. 24—No. 25) were prepared. With respect to these sintered bodies, the bulk density, strength and fracture toughness were measured and compared and the obtained results are shown in Table 1. The strength means the four point flexural strength according to JIS R-1601 "Testing Method for Flexural Strength (Modulus of Rupture) of High Performance Ceramics" and the fracture toughness was determined as follows according to the "Single Edge Notched Beam" method. The face of 3×40 mm of a sample having the same shape and processing precision as the sample for measuring the four point flexural strength, was the tensile face. A notch having a width of 0.1 mm, a depth of 1 mm and a length of 3 mm was cut and formed, the outer span was 30 mm, the inner span was 10 mm and the loading rate was 0.5 mm/min.

TABLE 1(a)

| | Sample No. | Mixing ratio (%) | | | | | | |
|---|---|---|---|---|---|---|---|---|
| | | $Si_3N_4$ | Calculated as SrO | Calculated as MgO | Calculated as $Ce_2O_3$ | Calculated as $Y_2O_3$ | Oxides of other rare earth elements | Calculated as $ZrO_2$ |
| Present invention | No. 1 | 75.9 | 0.1 | 8.0 | | 9.0 | | 7.0 |
| | No. 2 | 84.4 | 0.2 | 0.2 | 0.2 | | | 15.0 |
| | No. 3 | 71.0 | 3.0 | 2.0 | 18.0 | | | 6.0 |
| | No. 4 | 79.3 | 17.5 | 3.0 | | 0.1 | | 0.1 |
| | No. 5 | 70.3 | 0.1 | 24.5 | 0.1 | | | 5.0 |
| | No. 6 | 73.0 | 1.5 | 2.5 | | 18.5 | | 4.5 |
| | No. 7 | 87.0 | 1.0 | 3.5 | 4.5 | | | 4.0 |
| | No. 8 | 82.5 | 0.5 | 4.0 | | 5.5 | | 7.5 |
| | No. 9 | 81.0 | 0.4 | 2.0 | 2.0 | | | 14.6 |
| | No. 10 | 81.0 | 2.0 | 2.0 | 12.0 | | | 3.0 |
| | No. 11 | 80.5 | 1.0 | 17.0 | | 0.5 | | 1.0 |
| | No. 12 | 80.5 | 0.5 | 1.0 | | 12.5 | | 5.5 |
| | No. 13 | 81.5 | 0.5 | 10.5 | | | $La_2O_3$ 4.5 | 3.0 |
| | No. 14 | 81.0 | 0.5 | 10.0 | | | $Er_2O_3$ 5.0 | 3.5 |

TABLE 1(a) (contd.)

|  | Sample No. | Mixing ratio (%) | | | | | | |
|---|---|---|---|---|---|---|---|---|
|  |  | $Si_3N_4$ | Calculated as SrO | Calculated as MgO | Calculated as $Ce_2O_3$ | Calculated as $Y_2O_3$ | Oxides of other rare earth elements | Calculated as $ZrO_2$ |
| Comparative example | No. 15 | 64.2 | 0.1 | 29.5 | 2.2 |  |  | 4.0 |
|  | No. 16 | 60.5 | 1.0 | 1.5 |  | 32.5 |  | 4.5 |
|  | No. 17 | 65.0 | 21.5 | 4.0 | 2.0 |  |  | 7.5 |
|  | No. 18 | 62.0 | 1.0 | 7.5 | 5.0 |  |  | 24.5 |
|  | No. 19 | 81.5 |  | 8.0 | 7.5 |  |  | 3.0 |
|  | No. 20 | 84.5 | 3.5 |  |  | 8.0 |  | 4.0 |
|  | No. 21 | 84.0 | 1.0 | 8.5 |  |  |  | 6.5 |
|  | No. 22 | 88.5 | 1.0 | 5.0 | 5.5 |  |  |  |
|  | No. 23 | 99.8 | 0.05 | 0.05 | 0.05 |  |  | 0.05 |
| Prior art sample | No. 24 | 90.0 |  | 10.0 |  |  | other oxides |  |
|  | No. 25 | 90.0 |  |  |  | 8.0 | $Al_2O_3$ 2.0 |  |

TABLE 1(b)

| | Sample No. | Relative density (%) | Composition in sintered body (%) | | | | | | | Strength (kg/mm²) | Fracture toughness (MN/m³/²) |
| | | | Sr | Mg | Ce | Y | Other rare earth elements | Zr | Si₃N₄ | Room temperature | room temperature |
|---|---|---|---|---|---|---|---|---|---|---|---|
| Present invention | No. 1 | 97.1 | 0.1 | 4.7 | | 7.1 | | 5.1 | 75.1 | 83 | 6.1 |
| | No. 2 | 97.4 | 0.2 | 0.1 | 0.2 | | | 11.0 | 84.0 | 87 | 6.9 |
| | No. 3 | 97.3 | 2.3 | 1.2 | 14.9 | | | 4.4 | 70.3 | 89 | 6.5 |
| | No. 4 | 97.0 | 14.7 | 1.9 | | 0.1 | | 0.1 | 78.9 | 82 | 6.1 |
| | No. 5 | 97.2 | 0.1 | 14.9 | 0.1 | | | 3.7 | 70.0 | 90 | 6.6 |
| | No. 6 | 97.1 | 1.2 | 1.5 | | 14.5 | | 3.2 | 72.6 | 84 | 6.2 |
| | No. 7 | 98.2 | 0.7 | 2.2 | 3.8 | | | 3.0 | 86.8 | 99 | 7.2 |
| | No. 8 | 97.9 | 0.3 | 2.3 | | 4.4 | | 5.7 | 82.1 | 93 | 7.1 |
| | No. 9 | 98.1 | 0.3 | 1.1 | 1.7 | | | 10.8 | 80.5 | 100 | 7.4 |
| | No. 10 | 98.3 | 1.6 | 1.2 | 9.7 | | | 2.1 | 80.6 | 99 | 7.3 |
| | No. 11 | 97.8 | 0.8 | 10.2 | | 0.4 | | 0.6 | 80.4 | 94 | 7.1 |
| | No. 12 | 97.8 | 0.4 | 0.5 | | 9.9 | | 4.1 | 80.3 | 93 | 7.1 |
| | No. 13 | 97.5 | 0.3 | 6.2 | | | La 4.0 | 5.1 | 81.2 | 89 | 6.7 |
| | No. 14 | 97.4 | 0.4 | 6.0 | | | Er 4.2 | 2.7 | 80.6 | 86 | 6.4 |

TABLE 1(b) (contd.)

| | Sample No. | Relative density (%) | Composition in sintered body (%) | | | | | | | Strength (kg/mm$^2$) | Fracture toughness (MN/m$^{3/2}$) |
|---|---|---|---|---|---|---|---|---|---|---|---|
| | | | Sr | Mg | Ce | Y | Other rare earth elements | Zr | Si$_3$N$_4$ | Room temperature | room temperature |
| Compara-tive example | No. 15 | 95.9 | 0.1 | 17.8 | 1.8 | | | 3.1 | 64.1 | 68 | 5.4 |
| | No. 16 | 96.3 | 0.7 | 0.8 | | 25.6 | | 3.4 | 60.3 | 67 | 4.3 |
| | No. 17 | 96.4 | 18.3 | 2.3 | 1.7 | | | 5.7 | 64.6 | 61 | 5.8 |
| | No. 18 | 96.1 | 0.8 | 4.6 | 4.2 | | | 18.3 | 61.6 | 60 | 5.1 |
| | No. 19 | 95.8 | | 4.8 | 6.3 | | | 2.3 | 80.3 | 56 | 4.0 |
| | No. 20 | 96.0 | 2.8 | | | 6.3 | | 3.0 | 84.4 | 64 | 5.3 |
| | No. 21 | 96.2 | 0.9 | 5.1 | | | | 4.7 | 83.7 | 52 | 5.6 |
| | No. 22 | 96.3 | 0.8 | 3.1 | 4.7 | | | | 88.4 | 65 | 5.3 |
| | No. 23 | 73.4 | 0.04 | 0.02 | 0.04 | | | 0.04 | 99.6 | 34 | 3.1 |
| Prior art sample | No. 24 | 96.8 | | | | | | | | 68 | 5.4 |
| | No. 25 | 96.9 | | | | | | | | 71 | 5.3 |

**0 117 936**

As seen from Table 1, the samples of the comparative examples and the prior art samples are lower in bulk density, and particularly in strength and fracture toughness than the silicon nitride sintered bodies of the present invention and the sintered bodies of the present invention show excellent properties.

Example 2

By using the raw material powder of silicon nitride and the raw material powders of the sintering aids, the sintered bodies obtained by adding $ZrO_2$ in the powder form and the abrased $ZrO_2$ powder formed through abrasion of the grinding balls made of zirconia ceramics, were compared. The grinding balls made of zirconia ceramics were spherical having an outer diameter of 7 mm and had a content of $ZrO_2$ of 94.2% by weight, a content of MgO of 3.4% by weight, the remainder being $SiO_2$, $Al_2O_3$, $Fe_2O_3$, $TiO_2$, CaO and $HfO_2$, a specific gravity of 5.5 and Mohs hardness of 6.5. The pulverizing condition, shaping condition, firing condition and the like were as in Example 1. The sintered bodies of Sample Nos. 26 and 27 were obtained by adding zirconia powder in the raw batch material and Sample Nos. 28—30 are obtained by adding $ZrO_2$ through abrasion of the grinding balls made of zirconia ceramics in a shorter grinding time. The amount of $ZrO_2$ mixed in the raw batch material through abrasion of the zirconia ceramics grinding balls was determined by chemically analyzing $ZrO_2$ in the pulverized powder. The properties of the sintered bodies were measured and compared and the obtained results are shown in Table 2.

9

TABLE 2(a)

Mixing ratio (%)

| Sample No. | Si₃N₄ | Calculated as SrO | Calculated as MgO | Calculated as Ce₂O₃ | Calculated as Y₂O₃ | Oxides of other rare earth elements | Calculated as ZrO₂ | Pulverized time (hour) |
|---|---|---|---|---|---|---|---|---|
| No. 26 | 82.5 | 0.5 | 4.0 | | 5.5 | | 7.5 *1 | 300 |
| No. 27 | 88.0 | 1.0 | 3.5 | 4.5 | | | 3.0 | 300 |
| No. 28 | 85.1 | 1.0 | 3.4 | 4.4 | | | 6.1 *2 | 140 |
| No. 29 | 82.6 | 0.9 | 3.3 | 4.2 | | | 9.0 | 200 |
| No. 30 | 82.5 | 0.5 | 4.0 | | 5.5 | | 7.5 | 160 |

Present invention

Note: *1: ZrO₂ added in powder form
*2: ZrO₂ introduced by abrasion of grinding balls made of zirconia ceramics.

TABLE 2(b)

| Sample No. | Relative density (%) | Composition in sintered body (%) | | | | | | | Strength (kg/mm²) Room temperature | Fracture toughness (MN/m^{3/2}) room temperature |
|---|---|---|---|---|---|---|---|---|---|---|
| | | Sr | Mg | Ce | Y | Other rare earth elements | Zr | Si₃N₄ | | |
| No. 26 | 98.0 | 0.4 | 2.3 | | 4.4 | | 5.7 | 82.4 | 93 | 7.1 |
| No. 27 | 98.3 | 0.8 | 2.2 | 3.6 | | | 2.2 | 87.8 | 99 | 7.3 |
| No. 28 | 99.0 | 0.9 | 2.1 | 3.7 | | | 4.5 | 84.8 | 121 | 8.2 |
| No. 29 | 98.9 | 0.8 | 2.0 | 3.6 | | | 6.7 | 82.5 | 119 | 8.1 |
| No. 30 | 98.6 | 0.4 | 2.4 | | 4.3 | | 5.6 | 82.3 | 114 | 7.6 |

Present invention

10

As seen from Table 2, the sintered bodies obtained by adding $ZrO_2$ through abrasion of zirconia ceramics grinding balls are higher in strength and fracture toughness than those obtained by adding $ZrO_2$ in the powder form and show excellent properties. They required a shorter pulverizing time and are improved from the economic viewpoint.

As mentioned above, the present invention can provide silicon nitride sintered bodies having particularly excellent density, mechanical strength and fracture toughness commercially cheaply by utilizing the synergistic activity of four elements of Sr, Mg, a rare earth element and Zr in the amount necessary for the sintering aid even in the pressureless sintering process and the sintered bodies can be used for, for example, engine parts, gas turbine parts, high temperature furnace material, heat resistant bearings and the like and are very high in commercial value.

**Claims**

1. A silicon nitride sintered body which contains oxides and/or oxynitrides of Sr, Mg, at least one rare earth element and Zr in an amount of 0.1—15% by weight (calculated as weight of element) of each of Sr, Mg and total rare earth and in an amount of 0.1—11% by weight of Zr calculated as elemental Zr, the remainder being $Si_3N_4$ in an amount of not less than 70% by weight.

2. Silicon nitride sintered body as claimed in claim 1, wherein the rare earth element is Ce or Y.

3. A method of producing a silicon nitride sintered body, which comprises shaping a starting material containing as sintering aid compounds of Sr, Mg, at least one rare earth element and Zr respectively in an amount of 0.1—18% by weight calculated as SrO, an amount of 0.2—25% by weight calculated at MgO, an amount of 0.1—19% by weight calculated as an oxide of trivalent rare earth element, an amount of 0.1—15% by weight calculated as $ZrO_2$, the remainder being not less than 70% by weight of silicon nitride powder, and firing the shaped body in nitrogen or an inert gas atmosphere.

4. A method as claimed in claim 3, wherein zirconium compound is introduced to the starting material by abrasion of grinding balls made of zirconia ceramics during pulverizing of the starting material by means of said grinding balls.

5. A method as claimed in claim 3 or claim 4, wherein the rare earth element is Ce or Y.

**Patentansprüche**

1. Gesinterter Siliciumnitridkörper, der Oxide und/oder Stickoxide von Sr und Mg, mindestens ein Element der Gruppe seltene Erden und Zr in einer Menge von 0,1—15 Gew. % (bezogen auf das Elementgewicht) jeweils an Sr, Mg und der Gesamtmenge der seltenen Erden und in einer Menge von 0,1 bis 11 Gew. % an Zr, bezogen auf elementares Zr, enthält, wobei der Rest $Si_3N_4$ in einer Menge von nicht weniger als 70 Gew. % ist.

2. Gesinterter Siliciumnitridkörper nach Anspruch 1, wobei das seltene Erden Element Ce oder Y ist.

3. Verfahren zur Herstellung eines gesinterten Siliciumnitridkörpers, bei dem ein Ausgangsmaterial geformt wird, das als Sinterhilfe Verbindungen von Sr, Mg, mindestens ein Element der Gruppe seltene Erden und Zr in einer Menge von 0,1 bis 18 Gew. %, bezogen auf SrO, einer Menge von 0,2 bis 25 Gew. %, bezogen auf MgO, einer Menge von 0,1 bis 19 Gew. %, bezogen auf ein Oxid eines dreiwertigen seltene Erden Elementes bzw. einer Menge von 0,1 bis 15 Gew. %, bezogen auf $ZrO_2$, enthält, wobei der Rest nicht weniger als 70 Gew. % des Siliciumnitridpulvers beträgt, und bei dem der geformte Körper in einer Atmosphäre aus Stickstoff oder einem Inertgas gebrannt wird.

4. Verfahren nach Anspruch 3, bei dem eine Zirconverbindung in das Ausgangsmaterial durch Reibungsabtrag von Schleifkugeln aus Zirconkeramik während der Pulverisierung des Ausgangsmaterial mittels der Schleifkugeln eingebracht wird.

5. Verfahren nach Anspruch 3 oder 4, dadurch gekennzeichnet, daß das seltene Erden Element Ce oder Y ist.

**Revendications**

1. Corps fritté de nitrure de silicium qui contient des oxydes et/ou oxynitrures de Sr, Mg, au moins un élément de terres rares et Zr en une quantité de 0,1—15% en poids (en calculant sous la forme du poids de l'élément) de chacun de Sr, Mg et terres rares au total et en une quantité de 0,1—11% en poids de Zr en calculant sous forme de Zr élémentaire, le restant étant $Si_3N_4$ en une quantité de pas moins de 70% en poids.

2. Corps fritté de nitrure de silicium selon la revendication 1 où l'élément de terres rares est Ce ou Y.

3. Procédé de production d'un corps fritté de nitrure de silicium qui consiste à mettre en forme une matière première contenant, comme auxiliaire de frittage, des composés de Sr, Mg, au moins un élément de terres rares et Zr respectivement en une quantité de 0,1—18% en poids en calculant sous forme de SrO, une quantité de 0,2—25% en poids en calculant sous forme de MgO, une quantité de 0,1—19% en poids en calculant sous forme d'un oxyde d'un élément de terres rares trivalent, une quantité de 0,1—15% en poids en calculant sous forme de $ZrO_2$, le restant n'étant pas moins de 70% en poids d'une poudre de nitrure de silicium, et en cuisant le corps en forme dans une atmosphère d'azote ou d'un gaz inerte.

**0 117 936**

4. Procédé selon la revendication 3 où le composé de zirconium est introduit à la matière première par abrasion de billes de broyage faites de céramique de zirconia pendant la pulvérisation de la matière première au moyen desdites billes de broyage.

5. Procédé selon la revendication 3 ou la revendication 4, où l'élément de terres rares est Ce ou Y.

12